# EUROPEAN PATENT SPECIFICATION

(11) **EP 2 307 683 B1**
(45) Date of publication and mention of the grant of the patent: **25.04.2012**
(21) Application number: 09757664.9
(22) Date of filing: 27.05.2009
(51) Int. Cl.: F02B 37/013, F02B 29/04, F16M 5/00, F02B 37/007

(54) **PISTON ENGINE**
KOLBENMOTOR
MOTEUR A PISTON

(30) Priority: 03.06.2008 FI 20085537
(43) Date of publication of application: 13.04.2011
(73) Proprietor: Wärtsilä Finland Oy, 65380 Vaasa (FI)
(72) Inventor: WIDJESKOG, Klaus, FI-65739 Jungsund (FI)
(74) Representative: Nissinen, Jyrki Antero
(86) International application number: PCT/FI2009/050442
(87) International publication number: WO 2009/147286

(56) References cited:
- DE-A1- 10 118 951
- DE-A1-102005 056 797
- GB-A- 2 069 593
- JP-A- 60 101 223
- JP-U- 60 120 229
- US-A1- 2002 056 444

## Description

The invention relates to a piston engine according to the preamble of claim 1, comprising a low-pressure turbocharger and a high-pressure turbocharger, which are placed on a bracket attached to an engine block.

In large turbocharged piston engines, which are employed in power plants and as main and auxiliary engines of ships, supercharging is often carried out in two stages, first by a low-pressure charger and then by a high-pressure charger. Between the supercharging stages and after the high-pressure charger, the charge air is cooled before conducting it to the cylinders of the engine. The supercharging can be carried out at as many as three separate stages. In large engines, the turbochargers and charge air coolers are large-size and they are difficult to place in connection with the engine. It is particularly problematic in V-engines, in which both cylinder rows may have a low-pressure turbocharger, a high-pressure turbocharger and charge air coolers of their own.

Document GB-A-2 069 593 discloses a reciprocating internal combustion engine with supercharging by several exhaust gas turbochargers. One or more housings are arranged on the internal combustion engine with the exhaust gas turbochargers being adapted to be mounted in the walls of such housing or housings in such a way that the turbines of the exhaust gas turbochargers and exhaust gas conduits are located in an interior of the housing or housings. The compressors of the exhaust gas turbochargers as well as the supercharger air conduits with the supercharger air coolers are located exteriorly of the housing or housings.

US 2002/056444 A1 discloses an air supplying structure for multi-cylinder engine comprising six pieces of high-pressure stage superchargers, six pieces of low-pressure stage superchargers, two pieces of inter coolers arranged between the high-pressure stage and low-pressure stage superchargers, and six pieces of after coolers arranged between the high-pressure stage superchargers and cylinders.

JP 60 101223 A discloses an internal combustion engine with two-stage supercharging, in which the air cooler for a high-pressure stage supercharger and the air cooler for a low-pressure stage supercharger are formed solidly together.

An object of the invention is to provide an improved solution for placing the turbochargers and charge air coolers in connection with the piston engine.

The objects of the invention are achieved by the method described in Claim 1. The piston engine according to the invention comprises an engine block, to which a bracket is attached. The low-pressure turbocharger and the high-pressure turbocharger are placed on the bracket. Furthermore, the engine comprises a low-pressure charge air cooler for cooling the low-pressure charge air pressurized by the low-pressure turbocharger and a high-pressure charge air cooler for cooling the high-pressure charge air pressurized by the high-pressure turbocharger. The bracket comprises an air casing, which includes a low-pressure space for the low-pressure charge air and a high-pressure space for the high-pressure charge air. The low-pressure charge air cooler is placed in the low-pressure space and the high-pressure charge air cooler is placed in the high-pressure space. Further, the air casing is integral with the bracket.

The invention provides considerable advantages. The turbochargers, air casing and charge air coolers are placed on the bracket or integrated into the bracket, due to which the turbocharger equipment is easy to place in connection with the engine. Furthermore, the connecting channels between the components can be rendered short, reducing the mass of the turbocharger equipment. The centre of gravity of the bracket can be placed close to the engine block, which reduces the vibration problems of the turbocharger equipment. In that case, both the turbocharger equipment and the engine operate in a better and more reliable manner.

In one embodiment of the invention, the low-pressure space of the air casing is arranged around the high-pressure space, e.g., on both sides and at the end of the high-pressure space. In that case, the pressure difference across the wall between the high-pressure and low-pressure spaces is smaller than in the air casing, wherein the atmospheric air pressure acts on the other side of the wall of the high-pressure space. Due to the smaller pressure difference, the walls of the high-pressure space can be made thinner, which reduces the weight of the bracket and any resulting problems. For safety reasons, e.g., in the case of leakage, it is also preferable that the higher-pressure airspace is located in the middle of the air casing and surrounded by the lower-pressure airspace. The arrangement also muffles the sounds of the high-pressure space that are heard outside the air casing.

In the following, the invention is described in an exemplary manner and with reference to the appended drawings, wherein:
Fig. 1 is a schematic view of the piston engine turbocharged at two stages;
Fig. 2 shows a top view of the engine block of the piston engine of Fig. 1, and the bracket attached thereto; and
Fig. 3 shows a partial cross section of the bracket of Fig. 2.

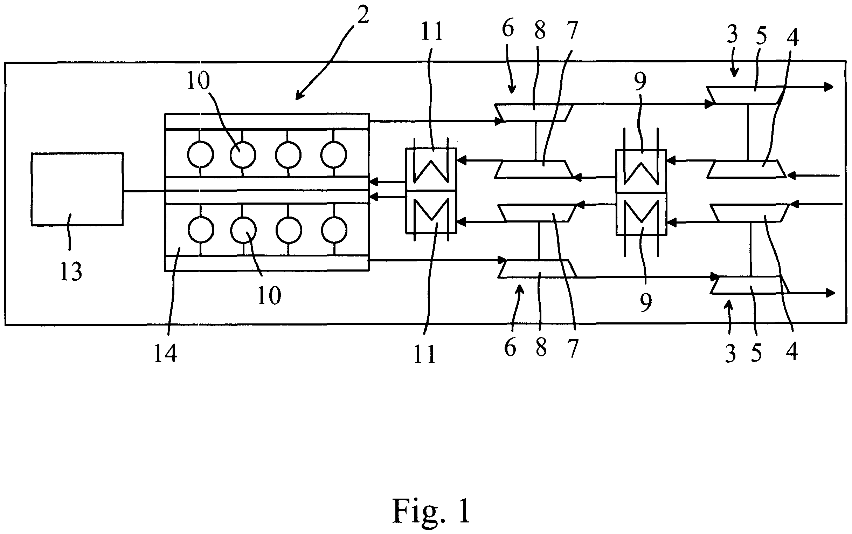

Fig. 1 is a schematic view of the piston engine 2 that is turbocharged at two stages. The engine is a large piston engine that is used, for example, as the main and auxiliary engines of ships and in power plants. The engine 2 is of a V-type. The engine 2 comprises two low-pressure turbochargers 3, each of them being provided with a low-pressure compressor 4 and a low-pressure turbine 5. The engine 2 further comprises two high-pressure turbochargers 6, each of them being provided with a high-pressure compressor 7 and a high-pressure turbine 8. Between the low-pressure compressors 4 and the high-pressure compressors 7, there are low-pressure charge air coolers 9, which are used to cool the charge air pressurized by the low-pressure compressors 4, before conducting it to the high-pressure compressors 7. Between the high-pressure compressors 7 and the engine cylinders 10, there are high-pressure charge air coolers 11, which cool the charge air pressurized by the high-pressure compressors 7 before conducting it to the cylinders 10. Generator equipment 13 is connected to the engine 2.

The bracket 12 is attached to the engine block 14 of the engine, on which bracket the low-pressure turbochargers 3 and the high-pressure turbochargers 6 are placed. The low-pressure turbochargers 3 are placed side by side and closer to the engine block 14 than the high-pressure turbochargers 6. The low-pressure turbochargers 3 are partly located above the engine block 14. The low-pressure turbochargers 3 are of an axial type and the high-pressure turbochargers 6 are of a radial type.

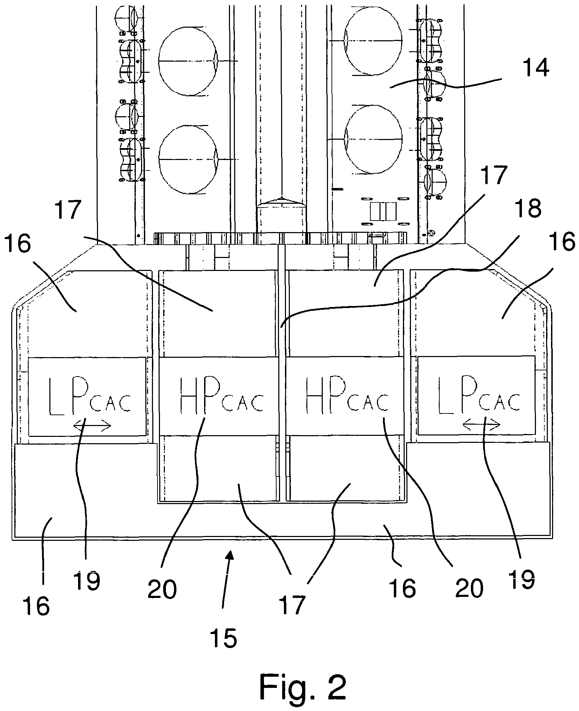

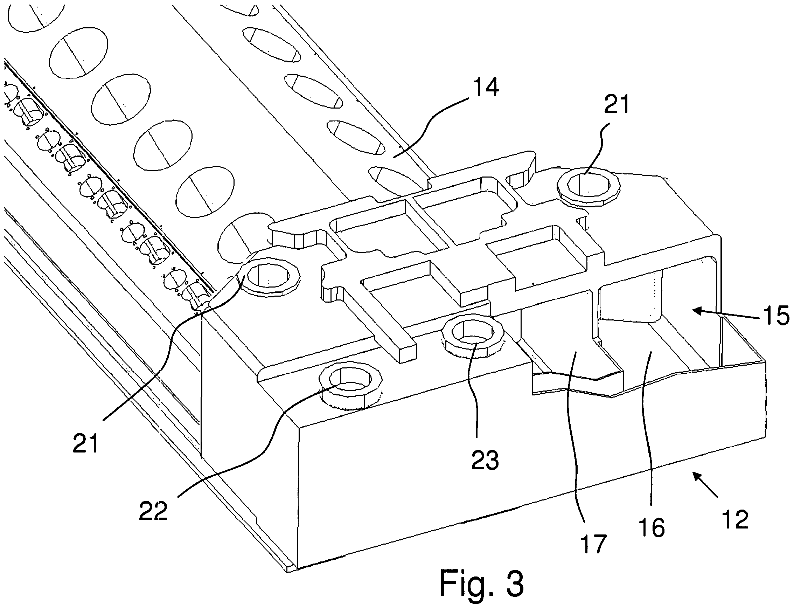

The structure of the bracket is shown in detail in Figs. 2 and 3. Fig. 2 shows the bracket without a cover part. The bracket 12 comprises an air casing 15 for the combustion air of the engine. The air casing 15 is in the lower section of the bracket 12, below the low-pressure 3 and high-pressure turbochargers 6. The air casing 15 is a fixed part of the bracket 12, i.e., integral with the bracket 12. The air casing 15 comprises a low-pressure space 16 for the charge air pressurized by the low-pressure compressors 5 and a high-pressure space 17 for the charge air pressurized by the high-pressure compressors 8. The low-pressure charge air coolers 9 are placed in the low-pressure space 16 and the high-pressure charge air coolers 11 in the high-pressure space 17. The bracket 12 can be made by casting.

The low-pressure space 16 is at least partly arranged around the high-pressure space 17, whereby the pressure prevailing in the low-pressure space 16 acts on the wall of the high-pressure space. The low-pressure space 16 and the high-pressure space 17 have at least one partition wall in common. In the embodiment of the drawings, the low-pressure space 16 is arranged on both sides of the high-pressure space 17. Furthermore, the low-pressure space 16 is arranged at the end of the high-pressure space 17. In that case, the pressure prevailing in the low-pressure space 16 acts on both side walls and the end wall of the high-pressure space 17. The sections of the low-pressure space 16 on the sides of the high-pressure space 17 are in flow connection with each other through the section of the low-pressure space 16 at the end of the high-pressure space 17. With the engine 2 running, the pressure of the charge air in the high-pressure space 17 is about 8 bar or as high as 10-16 bar. The charge air in the low-pressure space 16 is about 4 bar, whereby the pressure difference across the wall between the high-pressure space 17 and the low-pressure space 16 is about 4 bar or as high as 6-10 bar. Therefore, the walls between the high-pressure space 17 and the low-pressure space 16 can be rendered thinner than in the embodiment, wherein the atmospheric pressure acts directly on the wall of the high-pressure space 17, whereby the pressure difference across the wall of the high-pressure space 17 is about 8 bar or as high as 10-16 bar. The high-pressure space 17 is divided into two separate sections by the partition wall 18. The end of the air casing 15 can be opened, whereby the charge air coolers can be serviced and removed from the air casing 15 through the end.

A high-pressure charge air cooler 20 is placed in both sections of the high-pressure space 17. A low-pressure charge air cooler 19 is placed in the low-pressure space 16 on both sides of the high-pressure space. The high-pressure 20 and low-pressure charge air coolers 19 are connected to the coolant circuit of the engine 2. On the cover of the air casing 15, there are inlets 21 for conducting the charge air coming from the low-pressure compressors 4 to the low-pressure space 16, and outlets 22 for removing the cooled charge air from the low-pressure space 16. Furthermore, the air casing 15 comprises second inlets 23 for conducting the charge air coming from the high-pressure compressors 7 to the high-pressure space 17. The high-pressure space 17 comprises second outlets for removing the cooled charge air from the high-pressure space 17. The outlets 22 are placed near the outer end of the air casing 15 and the inlets 21 near the motor-side end of the air casing 15. The second inlets 23 are placed near the outer end of the air casing 15. The outlets 22 and the second inlets 23 are connected to the high-pressure compressors 7 through connecting channels. The inlets 21 are connected to the low-pressure compressors 5 through connecting channels.

With the engine 2 running, the combustion air is conducted to the low-pressure compressors 4, by which its pressure is raised to about 4 bar. Thereafter, the low-pressure charge air is conducted to the low-pressure space 16, where it is cooled by the low-pressure charge air coolers 19. The cooled charge air is conducted from the low-pressure space 16 to the high-pressure compressors 7, by which the pressure of the charge air is raised to about 8 bar. Thereafter, the high-pressure charge air is conducted to the high-pressure space 17 and cooled by the high-pressure charge air coolers 20. The cooled high-pressure charge air is conducted from the high-pressure space 17 to the cylinders 10 to be used as combustion air. The charge air is cooled by the coolant of the engine that is conducted to the charge air coolers 19, 20. Exhaust gas is conducted from the cylinders 10 through the high-pressure turbines 8 and then through the low-pressure turbines 5. The high-pressure turbine 8 drives the high-pressure compressor 7 and the low-pressure turbine 5 drives the low-pressure compressor 4.

The invention comprises embodiments that deviate from the above.

Instead of two separate stages, the turbo-charging can be carried out at three separate stages. In that case, the air casing includes spaces for three charge airs with different pressure levels. The air space with the highest pressure level is placed in the middle and those with lower pressure levels around the same.

The engine 2 can be a row engine.

The engine 2 can be provided with only one low-pressure turbocharger 3 and with only one high-pressure turbocharger 6. In that case, there is only one low-pressure charge air cooler 9 and one high-pressure charge air cooler 11. The one-piece high-pressure space can be arranged in the middle of the air casing 15 and the low-pressure space around it in a similar manner as in the embodiment according to the drawings.

## Claims

1. A piston engine (2) comprising an engine block (14), to which a bracket (12) is attached, a low-pressure turbocharger (3) placed on the bracket (12) and a high-pressure turbocharger (6) placed on the bracket (12), a low-pressure charge air cooler (19) for cooling the low-pressure charge air pressurized by the low-pressure turbocharger (3) and a high-pressure charge air cooler (20) for cooling the high-pressure charge air pressurized by the high-pressure turbocharger (6), which bracket (12) comprises an air casing (15) that includes a low-pressure space (16) for the low-pressure charge air and a high-pressure space (17) for the high-pressure charge air, the low-pressure charge air cooler (19) being placed in the low-pressure space (16), and the high-pressure charge air cooler (20) being placed in the high-pressure space (17), **characterized in that** the air casing (15) is integral with the bracket (12).

2. An engine (2) according to claim 1, **characterized in that** the high-pressure space (17) and the low-pressure space (16) comprise at least one common partition wall.

3. A piston engine (2) according to claim 1 or 2, **characterized in that** the low-pressure space (16) is at least partly arranged around the high-pressure space (17).

4. A piston engine (2) according to claim 1, 2 or 3, **characterized in that** the low-pressure space (16) is arranged on both sides of the high-pressure space (17).

5. A piston engine (2) according to claim 4, **characterized in that** the low-pressure space (16) is arranged at the end of the high-pressure space (17).

6. A piston engine (2) according to claim 5, **characterized in that** the sections of the low-pressure space (16) on the sides of the high-pressure space (17) are in flow connection with each other through the low-pressure space (16) at the end of the high-pressure space.

7. A piston engine (2) according to any of the preceding claims, **characterized in that** two low-pressure turbochargers (3) and two high-pressure turbochargers (6) are placed on the bracket (12).

8. A piston engine (2) according to claim 7, **characterized in that** two low-pressure charge air coolers (19) are placed in the low-pressure space (16) and two high-pressure charge air coolers (20) are placed in the high-pressure space (17).

9. A piston engine (2) according to claim 8, **characterized in that** the high-pressure charge air coolers (20) are placed side by side and the low-pressure charge air coolers (19) are placed on the sides thereof.

## Patentansprüche

1. Kolbenmotor (2), umfassend einen Motorblock (14), an dem eine Klammer (12) angebracht ist, einen Niederdruckturbolader (3), der an der Klammer (12) angeordnet ist, und einen Hochdruckturbolader (6), der an der Klammer (12) angeordnet ist, einen Niederdruckladeluftkühler (19) zum Kühlen der Niederdruckladeluft, die durch den Niederdruckturbolader (3) mit Druck beaufschlagt wird, und einen Hochdruckladeluftkühler (20) zum Kühlen der Hochdruckladeluft, die durch den Hochdruckturbolader (6) mit Druck beaufschlagt wird, wobei die Klammer (12) ein Luftgehäuse (15) umfasst, das einen Niederdruckraum (16) für die Niederdruckladeluft und einen Hochdruckraum (17) für die Hochdruckladeluft umfasst, wobei der Niederdruckladeluftkühler (19) in dem Niederdruckraum (16) angeordnet ist, und der Hochdruckladeluftkühler (20) in dem Hochdruckraum (17) angeordnet ist, **dadurch gekennzeichnet, dass** das Luftgehäuse (15) einstückig mit der Klammer (12) ausgeführt ist.

2. Motor (2) nach Anspruch 1, **dadurch gekennzeichnet, dass** der Hochdruckraum (17) und der Niederdruckraum (16) zumindest eine gemeinsame Trennwand umfassen.

3. Kolbenmotor (2) nach Anspruch 1 oder 2, **dadurch gekennzeichnet, dass** der Niederdruckraum (16) zumindest teilweise um den Hochdruckraum (17) angeordnet ist.

4. Kolbenmotor (2) nach Anspruch 1, 2 oder 3, **dadurch gekennzeichnet, dass** der Niederdruckraum (16) an beiden Seiten des Hochdruckraums (17) angeordnet ist.

5. Kolbenmotor (2) nach Anspruch 4, **dadurch gekennzeichnet, dass** der Niederdruckraum (16) an dem Ende des Hochdruckraums (17) angeordnet ist.

6. Kolbenmotor (2) nach Anspruch 5, **dadurch gekennzeichnet, dass** die Abschnitte des Niederdruckraums (16) an den Seiten des Hochdruckraums (17) durch den Niederdruckraum (16) an dem Ende des Hochdruckraums miteinander in einer Fließverbindung stehen.

7. Kolbenmotor (2) nach einem der vorhergehenden Ansprüche, **dadurch gekennzeichnet, dass** an der Klammer (12) zwei Niederdruckturbolader (3) und zwei Hochdruckturbolader (6) angeordnet sind.

8. Kolbenmotor (2) nach Anspruch 7, **dadurch gekennzeichnet, dass** in dem Niederdruckraum (16) zwei Niederdruckladeluftkühler (19) angeordnet sind, und in dem Hochdruckraum (17) zwei Hochdruckladeluftkühler (20) angeordnet sind.

9. Kolbenmotor (2) nach Anspruch 8, **dadurch gekennzeichnet, dass** die Hochdruckladeluftkühler (20) nebeneinander angeordnet sind, und die Niederdruckladeluftkühler (19) an deren Seiten angeordnet sind.

## Revendications

1. Moteur à piston (2) comprenant un bloc moteur (14) auquel une fixation (12) est fixée, un turbochargeur basse pression (3) placé sur la fixation (12) et un turbochargeur haute pression (6) placé sur la fixation (12), un refroidisseur d'air de suralimentation basse pression (19) pour refroidir l'air de suralimentation basse pression pressurisé par le turbochargeur basse pression (3) et un refroidisseur d'air de suralimentation haute pression (20) pour refroidir l'air de suralimentation haute pression pressurisé par le turbochargeur haute pression (6), laquelle fixation (12) comprend un carter d'air (15) qui comprend un espace basse pression (16) pour l'air de suralimentation basse pression et un espace haute pression (17) pour l'air de suralimentation haute pression, le refroidisseur d'air de suralimentation basse pression (19) étant placé dans l'espace basse pression (16) et le refroidisseur d'air de suralimentation haute pression (20) étant placé dans l'espace haute pression (17), **caractérisé en ce que** le carter d'air (15) est monobloc avec la fixation (12).

2. Moteur (2) selon la revendication 1, **caractérisé en ce que** l'espace haute pression (17) et l'espace basse pression (16) comprennent au moins une paroi de séparation commune.

3. Moteur (2) selon la revendication 1 ou 2, **caractérisé en ce que** l'espace basse pression (16) est au moins partiellement agencé autour de l'espace haute pression (17).

4. Moteur (2) selon la revendication 1, 2 ou 3, **caractérisé en ce que** l'espace basse pression (16) est agencé sur les deux côtés de l'espace haute pression (17).

5. Moteur (2) selon la revendication 4, **caractérisé en ce que** l'espace basse pression (16) est agencé au bout de l'espace haute pression (17).

6. Moteur (2) selon la revendication 5, **caractérisé en ce que** les sections de l'espace basse pression (16) sur les côtés de l'espace haute pression (17) sont en connexion fluidique l'une avec l'autre à travers l'espace basse pression (16) au bout de l'espace haute pression.

7. Moteur (2) selon l'une quelconque des revendications précédentes, **caractérisé en ce que** deux turbochargeurs basse pression (3) et deux turbochargeurs haute pression (6) sont placés sur la fixation (12).

8. Moteur (2) selon la revendication 7, **caractérisé en ce que** deux refroidisseurs d'air de suralimentation basse pression (19) sont placés dans l'espace basse pression (16) et deux refroidisseurs d'air de suralimentation haute pression (20) sont placés dans l'espace haute pression (17).

9. Moteur (2) selon la revendication 8, **caractérisé en ce que** les refroidisseurs d'air de suralimentation haute pression (20) sont placés côte à côte et que les refroidisseurs d'air de suralimentation basse pression (19) sont placés sur les côtés de ceux-ci.
